(19) Europäisches Patentamt
European Patent Office
Office européen des brevets

(11) EP 4 707 355 A1

(12) EUROPEAN PATENT APPLICATION
published in accordance with Art. 153(4) EPC

(43) Date of publication:
**11.03.2026 Bulletin 2026/11**

(21) Application number: **24826016.8**

(22) Date of filing: **21.06.2024**

(51) International Patent Classification (IPC):
***C09K 3/00*** (2006.01) ***C09D 7/61*** (2018.01)
***C09D 7/63*** (2018.01) ***C09D 201/00*** (2006.01)

(52) Cooperative Patent Classification (CPC):
**C09D 7/61; C09D 7/63; C09D 201/00; C09K 3/00**

(86) International application number:
**PCT/JP2024/022621**

(87) International publication number:
**WO 2024/262615 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.06.2023 JP 2023102481**

(71) Applicant: **Resonac Corporation**
**Tokyo 105-7325 (JP)**

(72) Inventors:
- **YAMANAKA, Takahiro**
  **Tokyo 105-7325 (JP)**
- **SHIMIZU, Mari**
  **Tokyo 105-7325 (JP)**
- **FUKUTA, Ryuichiro**
  **Tokyo 105-7325 (JP)**
- **NAKANE, Yuri**
  **Tokyo 105-7325 (JP)**
- **KOTAKE, Tomohiko**
  **Tokyo 105-7325 (JP)**

(74) Representative: **Berggren Oy**
**P.O. Box 16**
**Fabianinkatu 21**
**00101 Helsinki (FI)**

(54) **ANTI-FOGGING AGENT, METHOD FOR PREVENTING FOGGING OF VEHICLE LAMP STRUCTURE, AND VEHICLE LAMP STRUCTURE**

(57) This anti-fogging agent includes: silica particles; a silane coupling agent X having a reactive group X; and a polyether compound Y having two or more reactive groups Y capable of reacting with and bonding to the reactive group X.

*Fig.1*

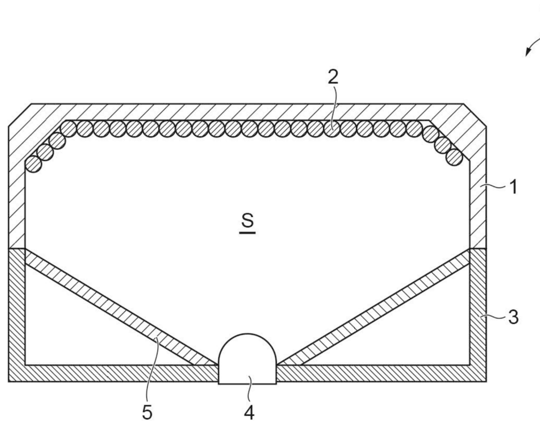




Processed by Luminess, 75001 PARIS (FR)

## Description

### Technical Field

The present disclosure relates to an anti-fogging agent, a method for preventing fogging of a vehicle lamp structure, and a vehicle lamp structure.

### Background Art

A method for applying an anti-fogging agent composition containing a surfactant to the interior of a lamp chamber of a vehicle lamp structure of automobiles or the like, which may cause fogging due to dew condensation, is known (see, for example, Patent Literature 1). When moisture adheres to an anti-fog film formed by an anti-fogging agent containing a surfactant, the moisture instantaneously turns into a water film due to the effect of the surfactant, and the occurrence of fogging is suppressed.

### Citation List

### Patent Literature

Patent Literature 1: Japanese Unexamined Patent Publication No. 2016-027134

### Summary of Invention

### Technical Problem

However, it has been found that in the above anti-fog film, the surfactant in the anti-fog film is transferred to the moisture side due to water droplets attached to the anti-fog film surface or moisture in the air, so that the anti-fogging property of the anti-fog film may deteriorate.

One aspect of the present disclosure has been made in view of the above circumstances, and an object thereof is to provide a novel anti-fogging agent capable of forming a silica-based anti-fog film excellent in water resistance and moisture resistance, a method for preventing fogging of a vehicle lamp structure using the anti-fogging agent, and a vehicle lamp structure using the anti-fogging agent.

### Solution to Problem

One aspect of the present invention includes the following [1] to [7].

[1] An anti-fogging agent including: silica particles; a silane coupling agent X having a reactive group X; and a polyether compound Y having two or more reactive groups Y capable of reacting with and bonding to the reactive group X.
[2] The anti-fogging agent according to [1], in which one of the reactive group X and the reactive group Y is an epoxy group, a carboxyl group, a hydroxy group, or an acid anhydride group, and the other is an amino group, an isocyanate group, or a ureido group (here, two or more reactive groups Y may be the same as or different from each other).
[3] The anti-fogging agent according to [1] or [2], in which the reactive group X is an epoxy group, and the reactive group is an amino group.
[4] The anti-fogging agent according to any one of [1] to [3], further including: a synthetic product A obtained by reacting a silane coupling agent A having an acid anhydride group or an epoxy group with a sorbitan compound having a hydroxy group.
[5] The anti-fogging agent according to any one of [1] to [4], further including: a silane coupling agent B having a polyether group.
[6] A method for preventing fogging of a vehicle lamp structure, including: a step of applying the anti-fogging agent according to any one of [1] to [5] to an inner surface of a lens included in a vehicle lamp structure to form a coating film; and a step of drying the coating film.
[7] A vehicle lamp structure including an anti-fog film formed from the anti-fogging agent according to any one of [1] to [5] on an inner surface of a lens.

## Advantageous Effects of Invention

According to one aspect of the present disclosure, it is possible to provide a novel anti-fogging agent capable of forming an anti-fog film excellent in water resistance and moisture resistance, a method for preventing fogging of a vehicle lamp structure using the anti-fogging agent, and a vehicle lamp structure using the anti-fogging agent.

## Brief Description of Drawings

FIG. 1 is a view schematically illustrating a vehicle lamp structure.
FIG. 2 is a diagram illustrating an IR chart before and after synthesis of a synthetic product 1.
FIG. 3 is a diagram illustrating an IR chart before and after synthesis of the synthetic product 1.
FIG. 4 is a schematic view for explaining a method for evaluating an anti-fogging agent.

## Description of Embodiments

Hereinafter, preferred embodiments of the present invention will be described in detail with reference to the drawings as the case may be. However, the present invention is not limited to the following embodiments. The materials exemplified below may be used singly, or in combination of two or more kinds thereof unless otherwise specified. In a case where there are a plurality of substances corresponding to each component in a composition, the content of each component in the composition indicates the total amount of the plurality of substances in the composition, unless otherwise specified. A numerical range using "to" indicates a range including numerical values described before and after "to" as a minimum value and a maximum value. In numerical ranges described in stages in the present specification, the upper limit or the lower limit of a numerical range in a certain stage may be replaced with the upper limit or the lower limit of a numerical range in another stage. In a numerical range described in the present specification, the upper limit or the lower limit of the numerical range may be replaced with a value shown in Examples.

<Anti-Fogging Agent>

The anti-fogging agent of the present embodiment contains silica particles, a silane coupling agent X having a reactive group X (hereinafter, this silane coupling agent is also referred to as a "silane coupling agent X"), and a polyether compound Y having two or more reactive groups Y capable of reacting with and binding to the reactive group X (hereinafter, this polyether compound is also referred to as a "polyether compound Y"). According to the anti-fogging agent of the present embodiment, a silica-based anti-fog film having sufficient water resistance and moisture resistance can be formed.

The present inventors infer the reason why such an effect is exhibited as follows. It is considered that, according to the anti-fogging agent having the above configuration, silica is bonded by a reactant of the silane coupling agent X and the polyether compound Y, and a polyether structure is incorporated between the silica, whereby a strong film with improved flexibility can be formed.

(Silica Particles)

A shape of the silica particles is not particularly limited. Examples of the shape of the silica particles include a bead shape (pearl necklace shape), a chain shape, a spherical shape, a cocoon shape, an aggregate shape, and a konpeito-like shape. The silica particles may be colloidal silica. Also, two or more kinds of shapes may be mixed.

The silica particles may contain a metal oxide other than silicon dioxide. Examples of the metal oxide include alumina. Examples of such silica particles include colloidal silica in which aluminosilicate is firmly formed on the surface of colloidal silica for stabilizing a silica sol.

An average particle diameter of the silica particles may be 1 to 1000 nm. When the average particle diameter is 1 nm or more, the silica particles are less likely to aggregate in the anti-fogging agent, and thus the silica particles easily adhere to a base material. On the other hand, when the average particle diameter is 1000 nm or less, a specific surface area of the silica particles increases, and the silica particles easily adhere to a base material. From these viewpoints, the average particle diameter of the silica particles may be 3 to 500 nm or 5 to 200 nm.

In the present specification, the average particle diameter of the silica particles can be measured, for example, by the following procedure. Dilution is performed with ion-exchanged water or any solvent so that the content of the silica particle is around 1.0% by mass (a content at which the transmittance (H) at the time of measurement is 60% to 70%), thereby obtaining a diluted solution. Then, the diluted solution is subjected to dynamic light scattering (manufactured by

Otsuka Electronics Co., Ltd., trade name: nanoSAQLA) to measure the average particle diameter of the silica particles.

Silica particles are available as a dispersion of silica particles. Examples of a dispersion medium include water, isopropyl alcohol, 1-methoxy-2-propyl alcohol, ethyl alcohol, methyl alcohol, ethylene glycol, ethylene glycol-n-propyl ether, propylene glycol monomethyl ether, propylene glycol monomethyl ether acetate, dimethylacetamide, N-methylpyrrolidone, toluene, methyl ethyl ketone, methyl isobutyl ketone, cyclohexane, and ethyl acetate. The dispersion medium may be a mixed liquid of the above dispersion media. The dispersion medium of the silica particles may be water from the viewpoint of versatility.

A raw material of the silica particles may be water glass or alkoxysilane. In a case where the raw material is water glass, in a step of producing silica particles, for example, sodium silicate is heated and concentrated by a hydrothermal synthesis method to produce silica particles. Specifically, the silica particles may be produced by producing an aggregate having a three-dimensional network structure in a state where the growth of primary particles is suppressed at an acidic pH and crushing the aggregate, or may be produced by accelerating the growth of the primary particles at an alkaline pH to produce a block-shaped aggregate and crushing the block-shaped aggregate. In a case where the raw material is alkoxysilane, in the step of producing silica particles, for example, alkoxysilane is sol-gel synthesized to produce silica particles. Specifically, the silica particles may be produced by accelerating a hydrolysis reaction of the alkoxysilane, then accelerating a polycondensation reaction to obtain a gel, and then removing a solvent by a heat treatment, or may be produced by obtaining a gel and then subjecting the gel to solvent substitution with a predetermined solvent.

As the dispersion of the silica particles, a commercially available product may be used, and examples thereof include ST-PS-SO, ST-PS-MO, ST-PS-M, ST-PS-S, ST-UP, ST-OUP, IPA-ST-UP, MA-ST-UP, PGM-ST-UP, MEK-ST-UP, IPA-ST, IPA-ST-L, IPA-ST-ZL, MA-ST-M, MA-ST-L, MA-ST-ZL, EG-ST, EG-ST-XL-30, NPC-ST-30, PGM-ST, DMAC-ST, DMAC-ST-ZL, NMP-ST, TOL-ST, MEK-ST-40, MEK-ST-L, MEK-ST-ZL, MIBK-ST, MIBK-ST-L, CHO-ST-M, EAC-ST, PMA-ST, MEK-EC-2130Y, MEK-EC-2430Z, MEK-EC-2140Z, MEK-AC-4130Z, MEK-AC-5140Z, PGM-AC-2140Y, PGM-AC-4130Y, MIBK-AC-2140Z, MIBK-SD-L, ST-XS, ST-OXS, ST-NXS, ST-CXS, ST-S, ST-OS, ST-NS, ST-30, ST-O, ST-N, ST-C, ST-AK, ST-50-T, ST-O-40, ST-N-40, ST-CM, ST-30L, ST-OL, ST-AK-L, ST-YL, ST-OYL, ST-AK-YL, ST-ZL, MP-1040, MP-2040, MP-4540M which are manufactured by Nissan Chemical Corporation; PL-1-IPA, PL-1-TOL, PL-2L-PGME, PL-2L-MEK, PL-2L, PL-3, PL-4, PL-5, PL-1H, PL-3H, PL-5H, BS-2L, BS-3L, BS-5L, HL-2L, HL-3L, HL-4L, PL-3-C, and PL-3-D which are manufactured by Fuso Chemical Co., Ltd.; TCSOL800 manufactured by Tama Chemical Industry Co., Ltd.; and SI-40, SI-50, SI-45P, SI-80P, SIK-23, S-30H, SIK-15, and SI-550 which are manufactured by JGC Catalysts and Chemicals Ltd.

The content of the silica particles may be 1% by mass or more, 5% by mass or more, or 10% by mass or more based on the total amount of a solid content of the anti-fogging agent from the viewpoint of achieving excellent anti-fogging properties. The content of the silica particles may be 97% by mass or less, 95% by mass or less, or 90% by mass or less based on the total amount of the solid content of the anti-fogging agent from the viewpoint of easily maintaining the anti-fogging properties (hydrophilicity). From these viewpoints, the content of the silica particles may be 1% to 97% by mass, 5% to 95% by mass, or 10% to 90% by mass based on the total amount of the solid content of the anti-fogging agent.

(Silane Coupling Agent X)

The reactive group X of the silane coupling agent X may be an epoxy group, a carboxyl group, a hydroxy group, or an acid anhydride group, or may be an amino group, an isocyanate group, or a ureido group. In a case where the reactive group Y is an amino group, an isocyanate group, or a ureido group, the reactive group X may be an epoxy group, a carboxyl group, a hydroxy group, or an acid anhydride group, and in a case where the reactive group Y is an epoxy group, a carboxyl group, a hydroxy group, or an acid anhydride group, the reactive group X may be an amino group, an isocyanate group, or a ureido group.

Examples of the silane coupling agent having an epoxy group include 3-glycidyloxypropyltrimethoxysilane (such as KBM-403 manufactured by Shin-Etsu Chemical Co., Ltd.), 8-glycidoxyoctyltrimethoxysilane (such as KBM-4803 manufactured by Shin-Etsu Chemical Co., Ltd.), 3-glycidyloxypropyltriethoxysilane (such as KBE-403 manufactured by Shin-Etsu Chemical Co., Ltd.), KBE-402, X-12-981S, and X-12-984S (all are trade names, manufactured by Shin-Etsu Chemical Co., Ltd.).

Examples of the silane coupling agent having a carboxyl group include X-12-1135 (trade name, manufactured by Shin-Etsu Chemical Co., Ltd.).

Examples of the silane coupling agent having an amino group include 3-aminopropyltrimethoxysilane (such as KBM-903, manufactured by Shin-Etsu Chemical Co., Ltd.), 3-aminopropyltriethoxysilane (such as KBE-903, manufactured by Shin-Etsu Chemical Co., Ltd.), N-2-(aminoethyl)-3-aminopropyltrimethoxysilane (such as KBM-603, manufactured by Shin-Etsu Chemical Co., Ltd.), N-2-(aminoethyl)-8-aminooctyltrimethoxysilane (such as KBM-6803, manufactured by Shin-Etsu Chemical Co., Ltd.), N-2-(aminoethyl)-3-aminopropyltriethoxysilane (such as KBE-603, manufactured by Shin-Etsu Chemical Co., Ltd.), N-phenyl-3-aminopropyltrimethoxysilane (such as KBM-573, manufactured by Shin-Etsu Chemical Co., Ltd.), N-2-(aminoethyl)-3-aminopropylmethyldimethoxysilane (such as KBM-602, manufactured by

Shin-Etsu Chemical Co., Ltd.), N-2-(aminoethyl)-3-aminopropylmethyldiethoxysilane (such as KBE-602, manufactured by Shin-Etsu Chemical Co., Ltd.), N-(vinylbenzyl)-2-aminoethyl-3-aminopropyltrimethoxysilane (such as KBM-575, manufactured by Shin-Etsu Chemical Co., Ltd.), 3-triethoxysilyl-N-(1,3-dimethylbutylidene)propylamine (such as KBE-9103P, manufactured by Shin-Etsu Chemical Co., Ltd.), and X-12-972F (trade name, manufactured by Shin-Etsu Chemical Co., Ltd.).

The silane coupling agent X may be a silane coupling agent represented by General Formula (X).

[Chem. 1]

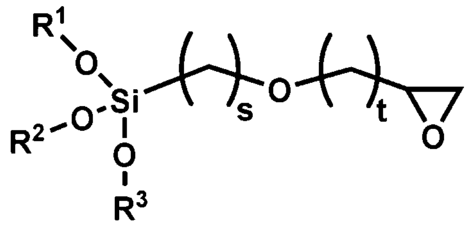

(X)

[In Formula (X), $R^1$, $R^2$, and $R^3$ each independently represent a hydrogen atom or an alkyl group having 1 to 6 carbon atoms, s represents an integer of 1 to 10, and t represents an integer of 1 to 10.]

In Formula (X), $R^1$, $R^2$, and $R^3$ may each independently be a hydrogen atom, a methyl group, or an ethyl group. s may be an integer of 1 to 8, 1 to 5, or 1 to 3. t may be an integer of 1 to 8, 1 to 5, or 1 to 3.

The content of the silane coupling agent X can be appropriately set according to the content of the polyether compound Y, and may be 0.1 parts by mass or more, or 1 part by mass or more, and may be 100 parts by mass or less, or 50 parts by mass or less, with respect to 100 parts by mass of the silica particles. The content of the silane coupling agent X may be 0.1 to 100 parts by mass or 1 to 50 parts by mass with respect to 100 parts by mass of the silica particles.

The content of the silane coupling agent X can be appropriately set according to the content of the polyether compound Y, and may be 0.1% by mass or more or 1% by mass or more, and may be 50% by mass or less based on the total amount of the solid content of the anti-fogging agent. The content of the silane coupling agent X may be 0.1% to 50% by mass based on the total amount of the solid content of the anti-fogging agent.

(Polyether Compound Y)

The reactive group Y of the polyether compound Y may be an epoxy group, a carboxyl group, a hydroxy group, or an acid anhydride group, or may be an amino group, an isocyanate group, or a ureido group. In a case where the reactive group X is an epoxy group, a carboxyl group, a hydroxy group, or an acid anhydride group, the reactive group Y may be an amino group, an isocyanate group, or a ureido group. In a case where the reactive group X is an amino group, an isocyanate group, or a ureido group, the reactive group Y may be an epoxy group, a carboxyl group, a hydroxy group, or an acid anhydride group. Two or more reactive groups Y may be the same as or different from each other.

The polyether compound Y may have a polyether chain as a main chain. The polyether chain may contain a group represented by $-(R-O)_n-$(in the formula, R represents $C_2H_4$ or $C_3H_6$, and n represents an integer). In addition, the polyether chain may contain one or both of a repeating unit derived from ethylene oxide and a repeating unit derived from propylene oxide, and may be random or block in a case of containing both of them.

The polyether compound Y may be a polyether diamine compound represented by General Formula (Y) from the viewpoint of forming a hydrophilic compound having a reaction point.

[Chem. 2]

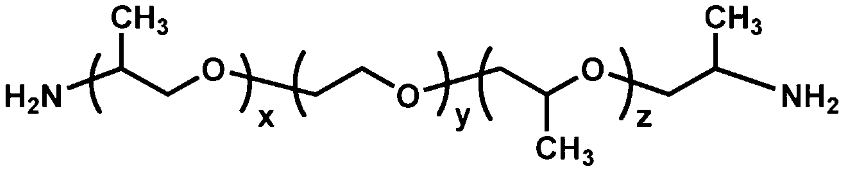

(Y)

[In Formula (Y), x, y, and z each represent an integer of 1 to 100.]

In Formula (Y), x + z may be 6.0 or less, y may be 39 or less, x + z may be 3.6 or less, y may be 9.0 or less, x + z may be 6.0 or less, and y may be 12.5 or less.

From the viewpoint of forming an anti-fog film with further improved moisture resistance, x + z may be 3 to 9 and y may be 30 to 50 in Formula (Y). In a case where the polyether diamine compound satisfying such conditions is blended, it is possible to form an anti-fog film also excellent in water film uniformity, and in the vehicle lamp structure, it is possible to sufficiently maintain the straightness or intensity of transmitted light while suppressing the occurrence of fogging.
In Formula (Y), y/(x + z) may be 3 to 8 from the same viewpoint as described above.
As the polyether compound Y, commercially available products such as "ED-600", "ED-900", and "ED-2003" (manufactured by HUNTSMAN, Inc., all are trade names may be used.
From the viewpoint of compatibility, the content of the polyether compound Y may be 0.01 parts by mass or more, or 0.1 parts by mass or more, and may be 10 parts by mass or less, or 1.0 parts by mass or less, with respect to 100 parts by mass of the silica particles. The content of the polyether compound Y may be 0.01 to 10 parts by mass or 0.1 to 1.0 parts by mass with respect to 100 parts by mass of the silica particles.
From the viewpoint of compatibility, the content of the polyether compound Y may be 0.01% by mass or more, 0.1% by mass or more, or 5.0% by mass or less based on the total amount of the solid content of the anti-fogging agent. The content of the polyether compound Y may be 0.01 to 5.0% by mass based on the total amount of the solid content of the anti-fogging agent.

(Synthetic Product A)

From the viewpoint of water resistance and moisture resistance, the anti-fogging agent of the present embodiment may further contain a synthetic product A obtained by reacting a silane coupling agent A having an acid anhydride group or an epoxy group (hereinafter, this silane coupling agent is also referred to as a "silane coupling agent A") with a sorbitan compound having a hydroxy group (hereinafter, this sorbitan compound is also referred to as a "sorbitan compound A").

[Silane Coupling Agent A]

The silane coupling agent having an acid anhydride group may be, for example, a silane coupling agent represented by General Formula (1).

[Chem. 3]

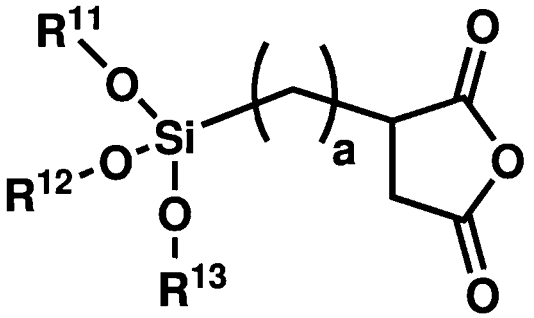

(1)

[In Formula (1), $R^{11}$, $R^{12}$, and $R^{13}$ each independently represent a hydrogen atom or an alkyl group having 1 to 6 carbon atoms, and a represents an integer of 1 to 10.]
In Formula (1), $R^{11}$, $R^{12}$, and $R^{13}$ may each independently be a hydrogen atom, a methyl group, an ethyl group, a propyl group, or a butyl group. a may be an integer of 1 to 8, 1 to 5, or 1 to 3.
Examples of the silane coupling agent having an acid anhydride group include 3-trimethoxysilylpropylsuccinic anhydride (such as X-12-967C manufactured by Shin-Etsu Chemical Co., Ltd.).
The silane coupling agent having an epoxy group may be, for example, a silane coupling agent represented by General Formula (2) or General Formula (3).

[Chem. 4]

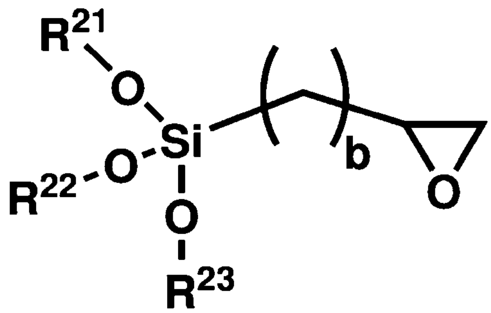

(2)

[In Formula (2), $R^{21}$, $R^{22}$, and $R^{23}$ each independently represent a hydrogen atom or an alkyl group having 1 to 6 carbon atoms, and b represents an integer of 1 to 10.]

[Chem. 5]

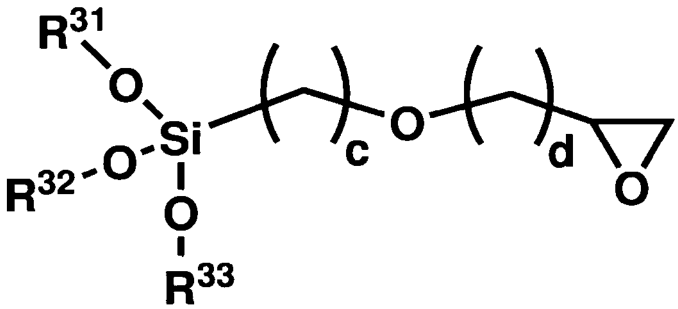

(3)

[In Formula (3), $R^{31}$, $R^{32}$, and $R^{33}$ each independently represent a hydrogen atom or an alkyl group having 1 to 6 carbon atoms, c represents an integer of 1 to 10, and d represents an integer of 1 to 10.]

In Formula (2), $R^{21}$, $R^{22}$, and $R^{23}$ may each independently be a hydrogen atom, a methyl group, or an ethyl group. b may be an integer of 1 to 8, 1 to 5, or 1 to 3.

In Formula (3), $R^{31}$, $R^{32}$, and $R^{33}$ may each independently be a hydrogen atom, a methyl group, or an ethyl group. c may be an integer of 1 to 8, 1 to 5, or 1 to 3. d may be an integer of 1 to 8, 1 to 5, or 1 to 3.

As the silane coupling agent having an epoxy group, those exemplified as the silane coupling agent X can be used.

[Sorbitan Compound A]

The sorbitan compound A is a sorbitan compound having one or more hydroxy groups. The number of hydroxy groups of the sorbitan compound A may be 2 or more or 3 or more, and may be 4 or less or 3 or less.

The sorbitan compound A may have a polyoxyethylene group. In a case where the sorbitan compound A has a polyoxyethylene group, the number of repeating units (oxyethylene groups) of the polyoxyethylene group may be 3 or more, 5 or more, or 6 or more, and may be 30 or less, 25 or less, or 20 or less.

The sorbitan compound A may be a sorbitan fatty acid ester compound which is an ester of sorbitan and a fatty

acid. Examples of the fatty acid include caprylic acid, capric acid, lauric acid, myristic acid, pentadecylic acid, palmitic acid, margaric acid, stearic acid, oleic acid, vaccenic acid, and linoleic acid.

In a case where the sorbitan compound A is a sorbitan fatty acid ester compound, the number of ester groups of the sorbitan compound A may be 1 or more, and 3 or less or 2 or less.

The sorbitan compound A may be a sorbitan fatty acid ester compound having a polyoxyethylene group. Examples of the sorbitan fatty acid ester compound having a polyoxyethylene group include polyoxyethylene sorbitan monolaurate (such as TW-L120 and TW-L106 manufactured by Kao Corporation) and polyoxyethylene sorbitan monooleate (such as TW-O120 and TW-O106 manufactured by Kao Corporation).

A structure of the synthetic product A is determined according to a structure of the silane coupling agent A and a structure of the sorbitan compound A. The synthetic product A may include, for example, a compound represented by any one of General Formulae (4) to (6). The synthetic product A may include a condensate of the compound represented by any one of General Formulae (4) to (6), or may include a condensate of the compound represented by any one of General Formulae (4) to (6) and the silane coupling agent A.

[Chem. 6]

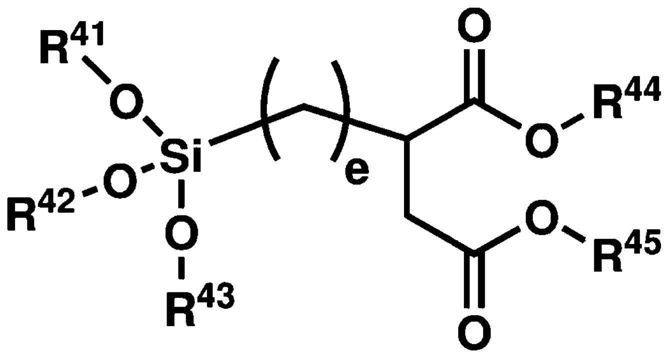

(4)

[In Formula (4), $R^{41}$, $R^{42}$, and $R^{43}$ each independently represent a hydrogen atom or an alkyl group having 1 to 6 carbon atoms, $R^{44}$ and $R^{45}$ each independently represent a hydrogen atom or a monovalent organic group, and e represents an integer of 1 to 10.]

[Chem. 7]

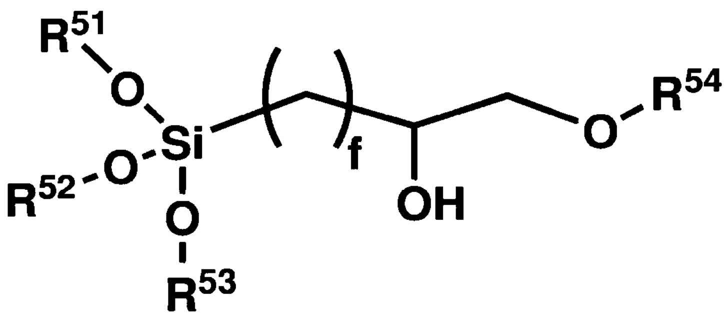

(5)

[In Formula (5), $R^{51}$, $R^{52}$, and $R^{53}$ each independently represent a hydrogen atom or an alkyl group having 1 to 6 carbon atoms, $R^{54}$ represents a hydrogen atom or a monovalent organic group, and f represents an integer of 1 to 10.]

[Chem. 8]

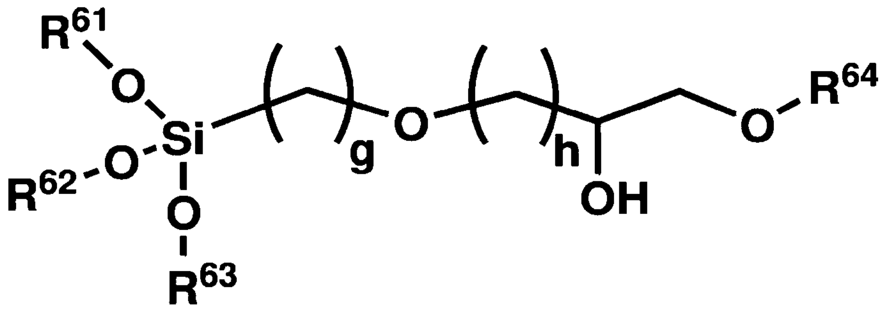

(6)

[In Formula (6), $R^{61}$, $R^{61}$, and $R^{63}$ each independently represent a hydrogen atom or an alkyl group having 1 to 6 carbon atoms, $R^{64}$ represents a hydrogen atom or a monovalent organic group, g represents an integer of 1 to 10, and h represents an integer of 1 to 10.]

In Formula (4), $R^{41}$, $R^{42}$, and $R^{43}$ may each independently be a hydrogen atom, a methyl group, or an ethyl group. $R^{44}$ and $R^{45}$ may each independently be a hydrogen atom or a structure derived from the sorbitan compound A. e may be an integer of 1 to 8, 1 to 5, or 1 to 3.

In Formula (5), $R^{51}$, $R^{52}$, and $R^{53}$ may each independently be a hydrogen atom, a methyl group, or an ethyl group. $R^{54}$ may be a hydrogen atom or a structure derived from the sorbitan compound A. f may be an integer of 1 to 8, 1 to 5, or 1 to 3.

In Formula (6), $R^{61}$, $R^{62}$, and $R^{63}$ may each independently be a hydrogen atom, a methyl group, or an ethyl group. $R^{64}$ may be a hydrogen atom or a structure derived from the sorbitan compound A. g may be an integer of 1 to 8, 1 to 5, or 1 to 3. h may be an integer of 1 to 8, 1 to 5, or 1 to 3.

The synthetic product A can be produced, for example, by stirring the silane coupling agent A and the sorbitan compound A in an environment of 40°C to 100°C for 0.5 to 24 hours. A mixing ratio of the silane coupling agent A and the sorbitan compound A may be 10 to 200 parts by mass or 30 to 100 parts by mass of the silane coupling agent A with respect to 100 parts by mass of the sorbitan compound A.

The conditions for synthesizing the synthetic product A can be adjusted by, for example, a change in a peak position that can be confirmed in the IR chart. Specifically, in a case where the silane coupling agent A has an acid anhydride group, a progress of a synthesis reaction can be confirmed by the fact that a peak around 1780 $cm^{-1}$ and a peak around 1850 $cm^{-1}$, which are peaks of an acid anhydride group, in the IR chart before synthesis are decreased in the IR chart after synthesis. In addition, in a case where the silane coupling agent A has an epoxy group, a progress of a synthesis reaction can be confirmed by the fact that a peak around 910 $cm^{-1}$, which is a peak of an epoxy group, in the IR chart before synthesis is decreased in the IR chart after synthesis.

From the viewpoint of achieving superior water resistance and moisture resistance of the anti-fog film, the content of the synthetic product A may be 1 part by mass or more, 3 parts by mass or more, 5 parts by mass or more, 12 parts by mass or more, 15 parts by mass or more, 20 parts by mass or more, or 25 parts by mass or more, and may be 100 parts by mass or less, 80 parts by mass or less, 60 parts by mass or less, 50 parts by mass or less, or 40 parts by mass or less, with respect to 100 parts by mass of the silica particles. The content of the synthetic product A may be 1 to 100 parts by mass, 5 to 60 parts by mass, or 15 to 40 parts by mass with respect to 100 parts by mass of the silica particles.

From the viewpoint of achieving superior water resistance and moisture resistance of the anti-fog film, the content of the synthetic product A may be 10 parts by mass or more, 30 parts by mass or more, 50 parts by mass or more, or 100 parts by mass or more, and may be 500 parts by mass or less, 300 parts by mass or less, 200 parts by mass or less, or 150 parts by mass or less, with respect to 100 parts by mass of the silane coupling agent B described later. The content of the synthetic product A may be 10 to 500 parts by mass or 50 to 200 parts by mass with respect to 100 parts by mass of the silane coupling agent B described later.

From the viewpoint of achieving superior water resistance and moisture resistance of the anti-fog film, the content of the synthetic product A may be 1% by mass or more, 2% by mass or more, 3% by mass or more, or 4% by mass or more, and may be 40% by mass or less, 30% by mass or less, 28% by mass or less, or 26% by mass or less, based on the total amount of the solid content of the anti-fogging agent. The content of the synthetic product A may be 1% to 40% by mass or 4% to 26% by mass based on the total amount of the solid content of the anti-fogging agent.

(Silane Coupling Agent B Having Polyether Group)

The anti-fogging agent of the present embodiment may further contain a silane coupling agent B having a polyether group (hereinafter, this silane coupling agent is also referred to as a "silane coupling agent B") from the viewpoint of compatibility.

The silane coupling agent B may be a compound represented by the following General Formula (7).

[Chem. 9]

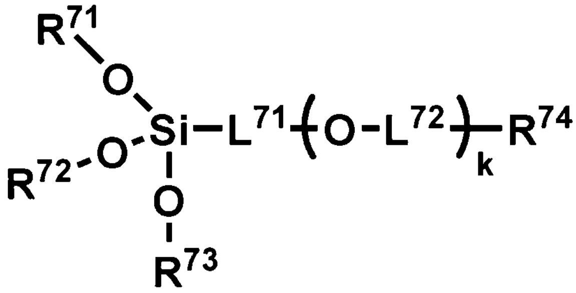

(7)

[In Formula (7), $R^{71}$, $R^{72}$, $R^{73}$, and $R^{74}$ each independently represent a hydrogen atom or an alkyl group having 1 to 6 carbon atoms, $L^{71}$ and $L^{72}$ each independently represent an alkylene group having 1 to 6 carbon atoms, and k represents an integer of 3 to 25.]

$R^{71}$, $R^{72}$, $R^{73}$, and $R^{74}$ may be a methyl group, an ethyl group, a propyl group, or a butyl group. $L^{71}$ and $L^{72}$ may be an ethylene group, a propylene group, or a butylene group. k may be 10 to 20 or 11 to 15.

Examples of the silane coupling agent represented by General Formula (7) include A1230 (manufactured by Momentive Performance Materials Inc.) and X-12-641 (manufactured by Shin-Etsu Chemical Co., Ltd.).

From the viewpoint of compatibility, the content of the silane coupling agent B may be 1 part by mass or more, 5 parts by mass or more, 8 parts by mass or more, or 10 parts by mass or more, and may be 50 parts by mass or less, 40 parts by mass or less, 30 parts by mass or less, or 20 parts by mass or less, with respect to 100 parts by mass of the silica particles. The content of the silane coupling agent B may be 1 to 50 parts by mass or 8 to 30 parts by mass with respect to 100 parts by mass of the silica particles.

From the viewpoint of compatibility, the content of the silane coupling agent B may be 10 parts by mass or more, 30 parts by mass or more, 50 parts by mass or more, or 80 parts by mass or more, and may be 500 parts by mass or less, 400 parts by mass or less, 300 parts by mass or less, or 200 parts by mass or less, with respect to 100 parts by mass of the synthetic product A. The content of the silane coupling agent B may be 10 to 500 parts by mass or 50 to 300 parts by mass with respect to 100 parts by mass of the synthetic product A.

The content of the silane coupling agent B may be 1% by mass or more, 3% by mass or more, 5% by mass or more, or 7% by mass or more, and may be 30% by mass or less, 20% by mass or less, 15% by mass or less, or 13% by mass or less, based on the total amount of the solid content of the anti-fogging agent. The content of the silane coupling agent B may be 1% to 30% by mass or 5% to 15% by mass based on the total amount of the solid content of the anti-fogging agent.

(Other Silane Coupling Agents)

The anti-fogging agent of the present embodiment may further contain a silane coupling agent other than the silane coupling agent X and the silane coupling agent B described above. Examples thereof include silane coupling agents having a C1 to C30 branched or linear alkyl group, a C3 to C10 cycloalkyl group, a C6 to C10 aryl group, or a fluoro group.

Examples of the silane coupling agent having a C1 to C30 branched or linear alkyl group include methyltrimethoxysilane (such as KBM-13, manufactured by Shin-Etsu Chemical Co., Ltd.), ethyltrimethoxysilane, propyltrimethoxysilane (such as KBM-3033, manufactured by Shin-Etsu Chemical Co., Ltd.), butyltrimethoxysilane, pentyltrimethoxysilane, hexyltrimethoxysilane (such as KBM-3063, manufactured by Shin-Etsu Chemical Co., Ltd.), heptyltrimethoxysilane, octyltrimethoxysilane, nonyltrimethoxysilane, decyltrimethoxysilane (such as KBM-3103C, manufactured by Shin-Etsu Chemical Co., Ltd.), undecyltrimethoxysilane, dodecyltrimethoxysilane, tetradecyltrimethoxysilane, stearyltrimethoxysilane, methyltriethoxysilane (such as KBE-13, manufactured by Shin-Etsu Chemical Co., Ltd.), ethyltriethoxysilane, propyltriethoxysilane (such as KBE-3033, manufactured by Shin-Etsu Chemical Co., Ltd.), butyltriethoxysilane, pentyltriethoxysilane, hexyltriethoxysilane (such as KBE-3063, manufactured by Shin-Etsu Chemical Co., Ltd.), heptyltriethoxysilane, octyltriethoxysilane (such as KBE-3083, manufactured by Shin-Etsu Chemical Co., Ltd.), nonyltriethoxysilane, decyltriethoxysilane, undecyltriethoxysilane, dodecyltriethoxysilane, tetradecyltriethoxysilane, and stearyltriethoxysilane.

Examples of the silane coupling agent having a C6 to C10 aryl group include phenyltrimethoxysilane (such as KBM-103, KBM-202SS, KBE-103, and KBE-202, manufactured by Shin-Etsu Chemical Co., Ltd.) and p-styryltrimethoxysilane (such as KBM-1403, manufactured by Shin-Etsu Chemical Co., Ltd.).

Examples of the silane coupling agent having a fluoro group include 3,3,3-trifluoropropyltrimethoxysilane (such as KBM-7103, manufactured by Shin-Etsu Chemical Co., Ltd.).

(Binder Compound)

The anti-fogging agent of the present embodiment may further contain a binder compound. The binder compound refers to a compound that binds to silica particles and improves the strength of the anti-fog film by crosslinking. Examples of the binder compound include an epoxy compound, a polyvinyl alcohol, a modified polyvinyl alcohol, a polyacrylic acid, an acrylic resin, an epoxy resin, a urethane resin, a polyvinyl pyrrolidone, a polyvinyl pyrrolidone vinyl acetate copolymer (a vinyl acetate pyrrolidone copolymer), a polyamine-based resin, a cellulose, a dextrin, a cellulose nanofiber, a silicate oligomer, and a silicate polymer. The binder compounds can be used singly or in combination of two or more kinds thereof.
The binder compound may be an epoxy compound from the viewpoint of achieving excellent fogging resistance of the anti-fog film. Examples of the epoxy compound include polyfunctional epoxy compounds such as ethylene glycol diglycidyl ether, diethylene glycol diglycidyl ether, polyethylene glycol diglycidyl ether, propylene glycol diglycidyl ether, and polypropylene glycol diglycidyl ether.
Examples of a silane oligomer include Ethyl Silicate 40, Ethyl Silicate 48, EMS-485, Methyl Silicate 51, Methyl Silicate 53A, Colcoat PX, and Colcoat N-103X (all are manufactured by Colcoat Co., Ltd.).
From the viewpoint of achieving superior water resistance and moisture resistance of the anti-fog film, the content of the binder compound may be 0.1 to 1000 parts by mass, 0.5 to 500 parts by mass, or 1 to 100 parts by mass, with respect to 100 parts by mass of the silica particles.
From the viewpoint of achieving superior water resistance and moisture resistance of the anti-fog film, the content of the binder compound may be 0.1% to 30% by mass, 0.3% to 20% by mass, or 0.5% to 10% by mass, based on the total amount of the solid content of the anti-fogging agent.

(Metal Catalyst)

The anti-fogging agent of the present embodiment may further contain a metal catalyst. The metal catalyst functions as a bonding promoter material, and when the anti-fogging agent contains the metal catalyst, an anti-fog film excellent in moisture resistance and water resistance is more easily formed.
The metal catalyst is not particularly limited, and can be selected from known metal catalysts. Examples of the metal catalyst include a zirconium compound, a titanium compound, a nickel compound, an aluminum compound, and a tin compound.
The metal catalyst may be a zirconium compound, an aluminum compound, or a nickel compound, from the viewpoint of achieving superior moisture resistance and water resistance of the anti-fog film. When the anti-fogging agent contains at least one selected from the group consisting of a zirconium compound and an aluminum compound, as a metal catalyst, the number of bonding points with the silica particles (for example, colloidal silica) increases, so that a stronger bond is easily formed.
The metal catalyst may be a commercially available product.
The anti-fogging agent according to the present embodiment may contain additives such as an antioxidant, an ultraviolet absorber, and a light stabilizer. As a defoaming agent, a catalyst, and the like which are used when preparing the raw material, the anti-fogging agent may contain nitric acid, hydrochloric acid, nitric acid, phosphoric acid, p-toluenesulfonic acid, benzenesulfonic acid, methanesulfonic acid, phenolsulfonic acid, oxalic acid, maleic acid, malonic acid, tartaric acid, citric acid, malic acid, acetic acid, lactic acid, succinic acid, benzoic acid, ammonia, urea, imidazole, sodium carbonate, calcium carbonate, sodium acetate, and the like, in addition to acetic acid. From the viewpoint of adjusting the viscosity of the anti-fogging agent, the anti-fogging agent may contain a thickener.
The anti-fogging agent may be a non-surfactant type. The non-surfactant type means that the content of the surfactant known as a component of the anti-fogging agent is 1% by mass or less based on the total amount of the solid content of the anti-fogging agent. The anti-fogging agent may not contain a surfactant (the content of the surfactant may be substantially 0 parts by mass based on the total amount of the solid content of the anti-fogging agent). Examples of the surfactant include surfactants such as an anionic surfactant, a cationic surfactant, a nonionic surfactant, and an amphoteric surfactant.

(Liquid Medium)

The anti-fogging agent may contain a liquid medium. The liquid medium may be a medium that serves, for example, to disperse silica particles in the anti-fogging agent, and dissolve the silane coupling agent X, the polyether compound Y, the synthetic product A, the silane coupling agent B, and the like. A boiling point of the liquid medium may be 185°C or lower from the viewpoints that the liquid medium is volatilized by heating during formation of the anti-fog film, the silica particles approach each other, and a bond between the silica particles is easily formed. The liquid medium may be the same as or different from the dispersion medium contained in the dispersion of silica particles.

As the liquid medium, for example, water, an organic solvent, or a mixed solvent thereof can be used. Examples of the organic solvent include alcohols such as methyl alcohol, ethyl alcohol, 1-propanol, isopropyl alcohol, 1-butyl alcohol, 2-butyl alcohol, isobutyl alcohol, diacetone alcohol, 1-butoxy-2-propanol, 1-hexanol, 1-octanol, 2-octanol, and 3-methoxy-3-methyl-1-butanol; glycols such as polyethylene glycol; glycol ethers such as ethylene glycol monomethyl ether, ethylene glycol monoethyl ether, ethylene glycol monopropyl ether, ethylene glycol monobutyl ether, ethylene glycol mono-tert-butyl ether, propylene glycol monomethyl ether acetate, propylene glycol n-propyl ether, and propylene glycol monomethyl ether; ketones such as acetone and methyl ethyl ketone; ethers such as 1,2-dimethoxyethane, tetrahydrofuran, and dioxane; esters such as ethyl acetate and butyl acetate; cyclic hydrocarbons such as cyclohexane; and acetonitrile.

<Method for Preventing Fogging of Vehicle Lamp Structure>

The anti-fogging agent according to the present embodiment can be used for anti-fogging of a vehicle lamp structure. The method for preventing fogging of a vehicle lamp structure may include, for example, a step (application step) of applying an anti-fogging agent to an inner surface of a lens included in the vehicle lamp structure to form a coating film, and a step (drying step) of drying the coating film. Prior to the application step, a cleaning step may be further included for the purpose of removing a release agent adhering to the surface of the lens.

(Cleaning Step)

A cleaning liquid used in the cleaning step is not particularly limited. In a case where a surface base material in the lens included in the vehicle lamp structure is polycarbonate, a liquid that does not dissolve the polycarbonate base material may be used, and for example, water, alcohols, or the like may be used. More specifically, water, isopropyl alcohol, methanol, ethanol, or the like may be used. The cleaning step may include a step of wiping the base material using a cloth or the like impregnated with the cleaning liquid.

(Application Step)

The application step is, for example, a step of applying an anti-fogging agent to the inner surface of the lens included in the vehicle lamp structure, and the anti-fogging agent may be applied to the entire inner surface of the lens or may be selectively applied to a part thereof.

A method for applying the anti-fogging agent is not particularly limited, and may be, for example, a spin coating method, a dip coating method, a spray coating method, a flow coating method, a bar coating method, or a gravure coating method. The anti-fogging agent may be applied by impregnating a cloth or the like with the anti-fogging agent. The method for applying the anti-fogging agent may be a spray coating method from the viewpoint of easily forming a coating film having a uniform thickness even on a surface to be treated having irregularities, and the viewpoint of high productivity and high use efficiency of the anti-fogging agent. These methods can be used singly or in combination of two or more kinds thereof.

The application amount is not limited because it depends on components of the anti-fogging agent, the content thereof, and the like, and may be, for example, $10^{-9}$ to $10^{3}$ g/m$^{2}$.

The temperature of the anti-fogging agent used in the application step may be, for example, 1°C to 50°C or 10°C to 30°C. When the temperature of the anti-fogging agent is 1°C or higher, it is easy to further improve the anti-fogging properties and the adhesion, and when the temperature is 50°C or lower, it is easy to improve the transparency of the anti-fog film. The treatment time with the anti-fogging agent may be, for example, 1 second to 1 hour, or 5 to 30 minutes.

(Drying Step)

The drying step may be a step of volatilizing the liquid medium from the anti-fogging agent after applying the anti-fogging agent. The liquid medium can be volatilized by being left to stand at normal temperature (for example, 20°C). By performing the drying step at a higher temperature, the adhesion between the lens inner surface and the anti-fog film can be further improved. The temperature of the drying step can be adjusted according to the heat-resistant temperature of the lens, and may be, for example, 5°C to 300°C or 10°C to 200°C. When the temperature is 5°C or higher, adhesion can be further improved, and when the temperature is 300°C or lower, deterioration due to heat can be further suppressed. The drying time can be 30 seconds to 150 hours. By this step, a silica-based anti-fog film is formed on the inner surface of the lens.

The thickness of the anti-fog film is not particularly limited, but may be 100 nm to 1000 μm, 500 nm to 10 μm, or 1000 nm to 5 μm from the viewpoint of transparency, anti-fogging property, and the like. The film thickness of the anti-fog film can be measured by, for example, an automatic film thickness measurement system F50 (manufactured by Filmetrics Corporation).

A water contact angle of the anti-fog film can be 40° or less with respect to 1 μL of a droplet of ultrapure water, and

may be 20° or less or 10° or less from the viewpoint of achieving excellent anti-fogging properties. The water contact angle can be calculated from an average value of 10 measurements using a contact angle meter.

The total light transmittance of the anti-fog film may be 80% or more, or 85% or more. When the total light transmittance of the anti-fog film is 80% or more, the luminance of the vehicle lamp can be maintained sufficiently high. The visible light transmittance of the anti-fog film can be measured by, for example, a spectroscopic haze meter SH 7000 (manufactured by Nippon Denshoku Industries Co., Ltd.).

The haze of the anti-fog film may be 4.0 or less, 3.0 or less, or 2.0 or less. When the haze of the anti-fog film is 4.0 or less, the luminance of the vehicle lamp can be maintained sufficiently high. The haze of the anti-fog film can be measured by, for example, a spectroscopic haze meter SH 7000 (manufactured by Nippon Denshoku Industries Co., Ltd.).

The YI of the anti-fog film may be 4.0 or less, 3.0 or less, or 2.0 or less. When the YI of the anti-fog film is 4.0 or less, the luminance of the vehicle lamp can be maintained sufficiently high. The YI of the anti-fog film can be measured by, for example, a spectroscopic haze meter SH 7000 (manufactured by Nippon Denshoku Industries Co., Ltd.).

FIG. 1 is a view schematically illustrating a vehicle lamp structure. The inner surface of the lens of the vehicle lamp structure is subjected to an anti-fog treatment using the anti-fogging agent according to the present embodiment. That is, the vehicle lamp structure includes an anti-fog film formed of an anti-fogging agent on the inner surface of the lens. The lamp structure 10 illustrated in FIG. 1 includes a lamp housing 3 configured in a recessed shape with one side opened, and a lens 1 that closes the opened side of the lamp housing 3. A material of the lens 1 is, for example, polycarbonate. A lamp chamber S is formed by the lamp housing 3 and the lens 1. A light source 4 disposed in the lamp chamber S is attached to the lamp housing 3. As the light source 4, an incandescent bulb, an LED bulb, a halogen bulb, or the like is appropriately adopted. In the lamp chamber S, as illustrated in the drawing, a reflector 5 functioning as a reflector for light from the light source 4 may be provided so as to surround the light source 4 from the rear side. An anti-fog film 2 formed of the anti-fogging agent is provided on an inner surface of the lens 1, that is, a surface facing the lamp chamber S. The anti-fog film 2 may be provided on the entire inner surface of the lens 1, or may be selectively provided on a part thereof as illustrated in FIG. 1.

<Hydrophilizing Agent>

The anti-fogging agent of the present embodiment can hydrophilize the surface of the base material, and thus can be referred to as a hydrophilizing agent. A surface which has been hydrophilized is less likely to decrease in hydrophilicity even after a fogging test, and can form a good water film when moisture is attached. This makes it possible to suppress the occurrence of fogging on a base material even in an environment exposed to volatile components. A treatment for the base material can be performed in the same manner as in the method for preventing fogging described above.

Examples of the material constituting the base material include resin materials such as polycarbonate, acrylic polymer, polyamide, polyacrylate, polyimide, acrylonitrile-styrene copolymer, styreneacrylonitrile-butadiene copolymer, polyvinyl chloride, polyethylene, and polycarbonate; metal materials such as aluminum, magnesium, copper, zinc, iron, titanium, chromium, manganese, cobalt, and nickel; inorganic materials such as silicon oxide, aluminum oxide, magnesium oxide, copper oxide, zinc oxide, iron oxide, titanium oxide, chromium oxide, manganese oxide, cobalt oxide, and nickel oxide; and glass. Examples of an article including such a base material include a windshield of a vehicle, glasses, goggles, a mirror, a storage container, a window, and a camera lens, in addition to the above-described vehicle lamp structure (such as automobile headlight).

## Examples

Next, the present invention will be described in more detail with reference to the following Examples, but these Examples do not limit the present invention.

<Production of Synthetic Product A>

(Synthetic Product 1)

A reaction solution containing 4.00 g of polyoxyethylene sorbitan monolaurate (manufactured by Kao Corporation, trade name: TW-L120) and 1.28 g of a silane coupling agent having an acid anhydride group (manufactured by Shin-Etsu Chemical Co., Ltd., trade name: X-12-967C) was obtained, and then the reaction solution was charged into a reactor and stirred at 80°C for 1 hour. Thereafter, the reaction solution was cooled to room temperature to obtain a synthetic product 1. IR charts before and after the synthesis of the synthetic product 1 are shown in FIGS. 2 and 3. From FIGS. 2 and 3, it was confirmed that the synthesis reaction was proceeding, as a peak around 1780 $cm^{-1}$ and a peak around 1850 $cm^{-1}$, which are peaks of acid anhydride groups in the IR chart before synthesis, disappeared. In the IR charts before and after the synthesis, it was confirmed that the peak intensity around 1735 $cm^{-1}$ was larger after the synthesis than before the synthesis.

<Production of Anti-Fogging Agent>

(Example 1)

25.0 g of SNOWTEX O (manufactured by Nissan Chemical Corporation, concentration: 20% by mass), 2.50 g of acetic acid, 0.50 g of a silane coupling agent (manufactured by Momentive Performance Materials Inc., trade name: A1230), 5.0 g of a 10% by mass aqueous solution of the synthetic product 1, 0.10 g of 3-glycidyloxypropyltrimethoxysilane (manufactured by Shin-Etsu Chemical Co., Ltd., trade name: KBM403), 21.2 g of water, and 45.7 g of IPA were mixed and stirred for 2 hours to obtain a stock solution.

0.10 g of a 30% by mass aqueous solution of polyetheramine (manufactured by HUNTSMAN, trade name: JEFFAMINEED-2003), 1.70 g of water, 49.10 g of IPA, and 15.80 g of ethylene glycol monobutyl ether were mixed to prepare a diluted solution. The diluted solution and the stock solution were mixed to obtain a coating liquid. The numbers shown in the tables mean a blending ratio (parts by mass) in terms of solid content.

(Examples 2 to 6)

A stock solution and a diluted solution were prepared so that the KBM403 and the ED-2003 were blended so as to satisfy the blending ratios shown in Table 1, and a coating liquid was obtained in the same manner as in Example 1. In the preparation of the stock solution, the blending amounts of water and IPA were adjusted so that a mass ratio between water and IPA in the stock solution was 1:1.

(Example 7)

A coating liquid was obtained in the same manner as in Example 1 except that a 10% by mass aqueous solution of polyetheramine (manufactured by HUNTSMAN, trade name: JEFFAMINEED-900) was used instead of the 30% by mass aqueous solution of the ED-2003, and a stock solution and a diluted solution were prepared so that the KBM403 and the ED-900 were blended so as to satisfy the blending ratios shown in Table 2. In the preparation of the stock solution, the blending amounts of water and IPA were adjusted so that a mass ratio between water and IPA in the stock solution was 1:1.

(Comparative Example 1)

A coating liquid was obtained in the same manner as in Example 1 except that a stock solution and a diluted solution were prepared so as to satisfy the blending ratio shown in Table 2 without blending the 30% by mass aqueous solution of ED-2003 and 3-glycidyloxypropyltrimethoxysilane.

<Formation of Anti-Fog Film on Polycarbonate Base Material>

A 10 cm square × 2 mm thick polycarbonate substrate was cleaned with isopropyl alcohol. The coating liquid obtained in Examples was applied to a substrate using an applicator or a spray, and heated at 110°C for 30 minutes to obtain a polycarbonate substrate with an anti-fog film having a film thickness shown in Tables 1 and 2 as a test material.

<Evaluation>

The following evaluations were performed for initial test materials, test materials after the following water resistance test, and test materials after the following moisture resistance test. The anti-fog index AFI was calculated for the initial test materials and the test materials after the following moisture resistance test, and the water film uniformity index WE was calculated for the initial test materials. The results are shown in Tables 1 and 2.

(Breath Test)

In a laboratory at a room temperature of 25°C, air was blown from a position 5 cm away from the anti-fog film of the test material, and the presence or absence of fogging was visually observed. The case where no fogging occurred was designated as "A", and the case where fogging occurred was designated as "B".

(Anti-Fog Index)

Using the apparatus shown in FIG. 4, an image for evaluation of anti-fogging properties and a reference image were obtained under the following imaging conditions. Using the obtained image for evaluation and reference image, the

anti-fog index AFI was calculated by the following calculation method.

[Imaging Conditions]

Sample image: Checkered pattern of black squares and white squares, each square having a side length of 0.5 mm
Temperature of water: 40°C
Distance D1: 1.5 cm
Depth D2: 1 cm
Distance D3: 17 cm (distance from sample image to center surface of foremost lens)
Digital camera: Canon PowerShot SX70 HS (Focal length in terms of 35 mm film: 15 mm, stored image: size of 1824 × 1824 pixels, and stored format: jpg), imaging was performed so that 4900 squares were included in a 1824 × 1824 pixel image.
Image for anti-fogging property evaluation: Imaged 10 seconds after the test material was placed.
Reference image: Imaged immediately after a polycarbonate substrate not treated with an anti-fogging agent was placed (at 0 seconds after the placement) (image O) and 10 seconds after (image N).
Compression method: Resize to 820 × 820 pixels and output at a compression rate of 20%.

[Calculation of Anti-Fog Index AFI]

The anti-fog index AFI was calculated by the following equation from a file capacity S1 when the image for anti-fogging property evaluation was compressed by the above compression method, a file capacity S2 when the image N was compressed by the above compression method, and a file capacity S0 when the image O was compressed by the above compression method.

$$AFI = (S1 - S2) \times 10/(S0 - S2)$$

(Water Film Uniformity Index)

Using the apparatus illustrated in FIG. 4, an image for evaluation and a reference image were obtained under the following imaging conditions. Using the obtained image for evaluation and reference image, the following image processing was performed to calculate the water film uniformity index WE.

[Imaging Conditions]

Sample image: Checkered pattern of black squares and white squares, each square having a side length of 0.5 mm
Temperature of water: 40°C
Distance D1: 1.5 cm
Depth D2: 1 cm
Distance D3: 17 cm (distance from sample image to center surface of foremost lens)
Digital camera: Canon PowerShot SX70 HS (Focal length in terms of 35 mm film: 15 mm, stored image: size of 1824 × 1824 pixels, and stored format: jpg), imaging was performed so that 4900 squares were included in a 1824 × 1824 pixel image.
Image for evaluation: Imaged 40 seconds after the test material was placed.
Reference image: Imaged immediately after a polycarbonate substrate not treated with an anti-fogging agent was placed (after 0 seconds from the placement).

[Image Processing]

(1) Using image processing software (ImageJ), the image for evaluation and the reference image are read and converted into 8 bits (Image → type → 8 bits).
(2) The threshold of the boundary is set to "90 to 255" (Image → Adjust → Threshold → set to "90 to 255" → apply).

(3) Binarization is performed (Process → Binary → Make Binary).
(4) "Area" is set as a measurement condition (Analyze → Set Measurements → Area is checked).
(5) An area of one pixel or more is calculated using particle analysis (Analyze → Analyze Particles → "Size" is set to "1-Infinity", "Show" is set to "Outlines", "Display results" and "Clear Results" are checked, and OK is clicked).
(6) From the information of (5) on the reference image, as the area distribution, a frequency distribution in increments of 20 pixels is created in a range of 0 to 1000 pixels, and an area range RA in which the frequency is 5% or more of the entire frequency is obtained.
(7) From the information of (5) on the image for an evaluation, as the area distribution, a frequency distribution in increments of 20 pixels is created in a range of 0 to 1000 pixels, and a ratio (%) of the number of particles (frequency) included in the area range in (6) to the number of all particles (total frequency) is calculated, and this is taken as a water film uniformity index WE.

(Water Resistance Test)

The test material was immersed in pure water, placed in a thermostatic chamber at 40°C, held for 120 h, and then allowed to stand at room temperature for 1 day.

(Moisture Resistance Test)

The test material was placed in a thermostatic chamber at 50°C, held for 120 h under the condition of a humidity of 95%, and then allowed to stand at room temperature for 1 day.

[Table 1]

| | | | Example 1 | Example 2 | Example 3 | Example 4 | Example 5 | Example 6 |
|---|---|---|---|---|---|---|---|---|
| Anti-fogging agent composition (part(s) by mass) | Silica particles | SNOWTEX O | 100 (particle content) | 100 (particle content) | 100 (particle content) | 100 (particle content) | 100 (particle content) | 100 (particle content) |
| | Silane coupling agent X | KBM-403 | 2 | 2 | 2 | 5 | 5 | 7 |
| | Polyether compound Y | ED-2003 | 0.6 | 0.1 | 0.5 | 0.1 | 0.5 | 0.5 |
| | Synthetic product A | Synthetic product 1 | 10 | 10 | 10 | 10 | 10 | 10 |
| | Silane coupling agent B | A1230 | 10 | 10 | 10 | 10 | 10 | 10 |
| Anti-fog film | Film thickness (nm) | | 1050 | 1040 | 1080 | 900 | 1050 | 900 |

(continued)

| | | | Example 1 | Example 2 | Example 3 | Example 4 | Example 5 | Example 6 |
|---|---|---|---|---|---|---|---|---|
| Evaluation | Breath test | Initial | A | A | A | A | A | A |
| | | After water resistance test | A | A | A | A | A | A |
| | | After moisture resistance test | A | A | A | A | A | A |
| | Anti-fog index AFI | Initial | 9.8 | 9.8 | 9.9 | 9.9 | 9.9 | 10.0 |
| | | After moisture resistance test | 8.9 | 9.8 | 9.0 | 9.6 | 9.7 | 9.1 |
| | Water film uniformity index WE (%) | Initial | 98 | 94 | 96 | 93 | 96 | 95 |

[Table 2]

| | | | Example 8 | Comparative Example 1 |
|---|---|---|---|---|
| Anti-fogging agent composition (part(s) by mass) | Silica particles | SNOWTEX O | 100 (particle content) | 100 (particle content) |
| | Silane coupling agent X | KBM-403 | 10 | - |
| | Polyether compound Y | ED-2003 | - | - |
| | | ED-900 | 1 | - |
| | Synthetic product A | Synthetic product 1 | 10 | 10 |
| | Silane coupling agent B | A1230 | 10 | 10 |
| Anti-fog film | Film thickness (μm) | | 1501 | 781 |
| Evaluation | Breath test | Initial | A | A |
| | | After water resistance test | A | B |
| | | After moisture resistance test | A | A |
| | Anti-fog index AFI | Initial | 7.6 | 8.0 |
| | | After moisture resistance test | 7.4 | 5.8 |
| | Water film uniformity index WE (%) | Initial | 88 | 49 |

**Reference Signs List**

1 Lens

2 Anti-fog film

3 Lamp housing
4 Light source
5 Reflector
S Lamp chamber
10 Lamp structure

## Claims

1. An anti-fogging agent comprising:

   silica particles;
   a silane coupling agent X having a reactive group X; and
   a polyether compound Y having two or more reactive groups Y capable of reacting with and bonding to the reactive group X.

2. The anti-fogging agent according to claim 1, wherein one of the reactive group X and the reactive group Y is an epoxy group, a carboxyl group, a hydroxy group, or an acid anhydride group, and the other is an amino group, an isocyanate group, or a ureido group (here, two or more reactive groups Y may be the same as or different from each other).

3. The anti-fogging agent according to claim 1, wherein the reactive group X is an epoxy group, and the reactive group is an amino group.

4. The anti-fogging agent according to claim 1, further comprising:
   a synthetic product A obtained by reacting a silane coupling agent A having an acid anhydride group or an epoxy group with a sorbitan compound having a hydroxy group.

5. The anti-fogging agent according to claim 1, further comprising:
   a silane coupling agent B having a polyether group.

6. The anti-fogging agent according to claim 4, further comprising:
   a silane coupling agent B having a polyether group.

7. A method for preventing fogging of a vehicle lamp structure, comprising:

   a step of applying the anti-fogging agent according to any one of claims 1 to 6 to an inner surface of a lens included in a vehicle lamp structure to form a coating film; and
   a step of drying the coating film.

8. A vehicle lamp structure comprising an anti-fog film formed from the anti-fogging agent according to any one of claims 1 to 6 on an inner surface of a lens.

Fig.1

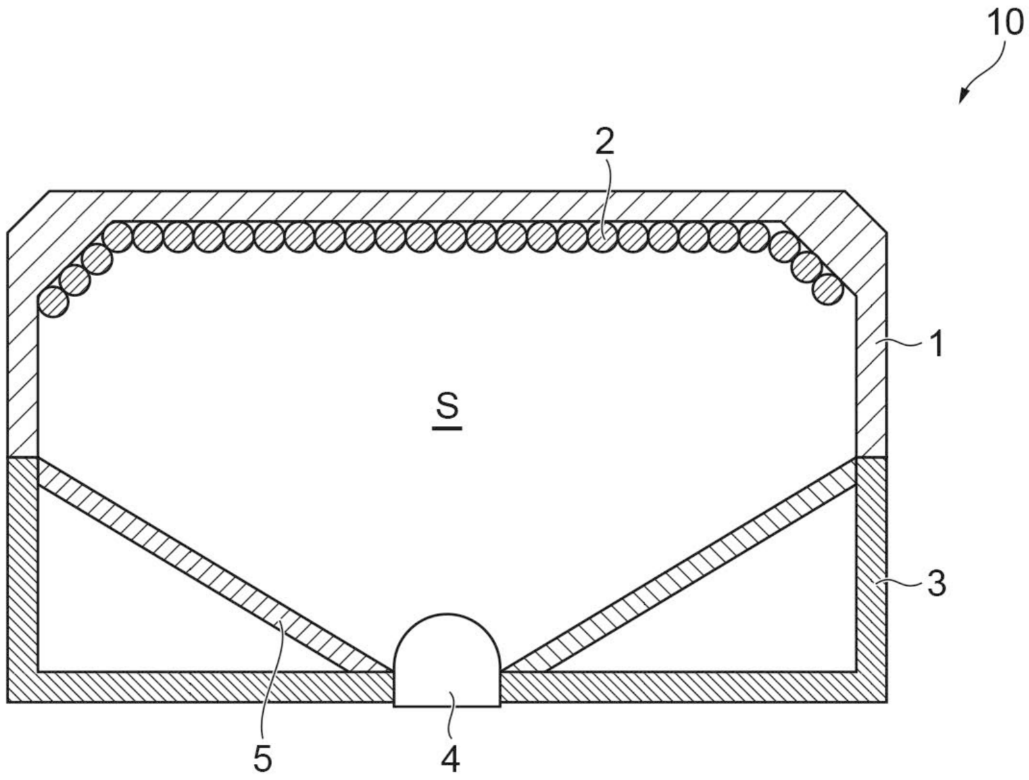

Fig.2

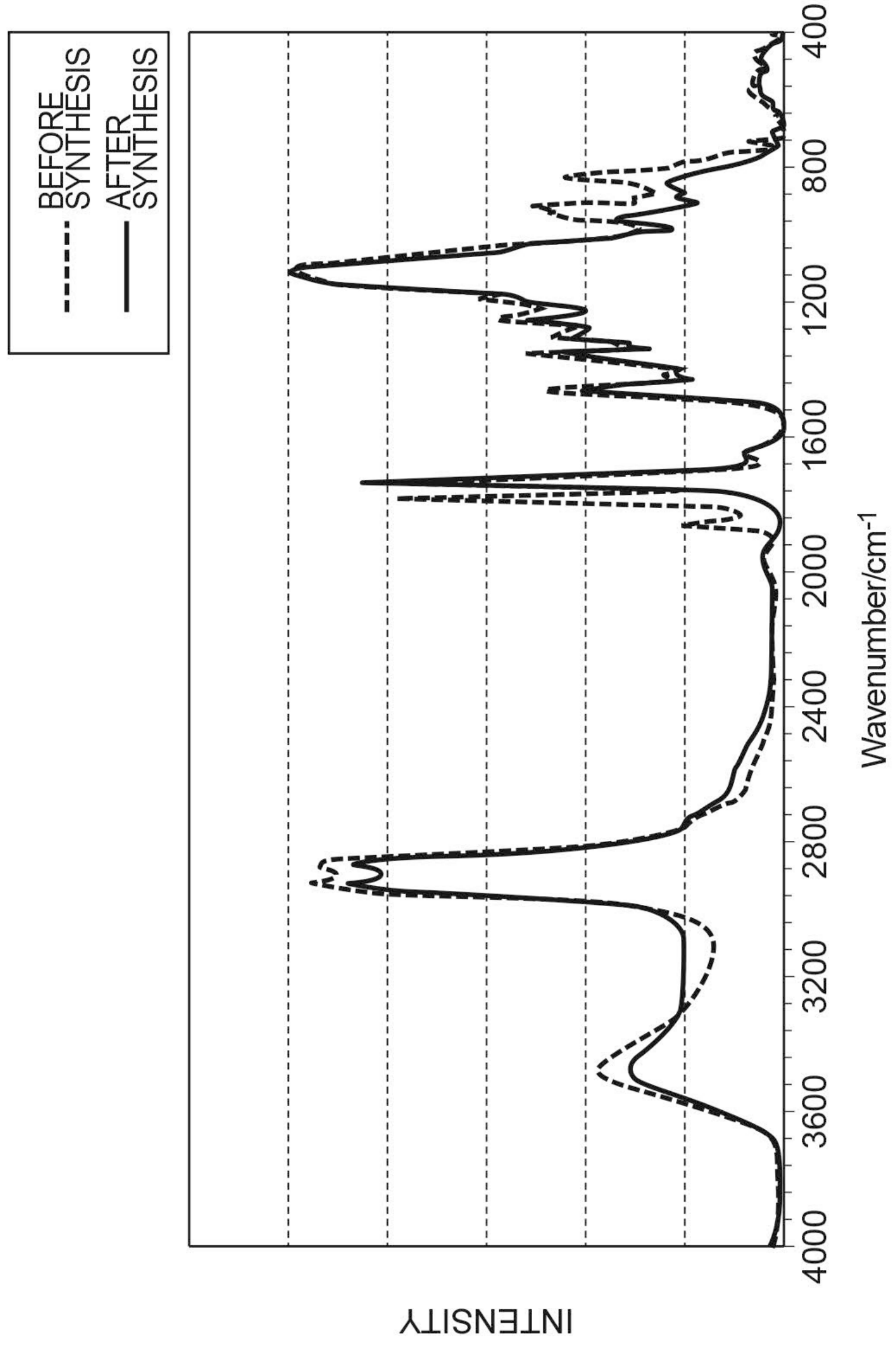
BEFORE SYNTHESIS
AFTER SYNTHESIS
INTENSITY
Wavenumber/cm-1
4000
3600
3200
2800
2400
2000
1600
1200
800
400

Fig.3

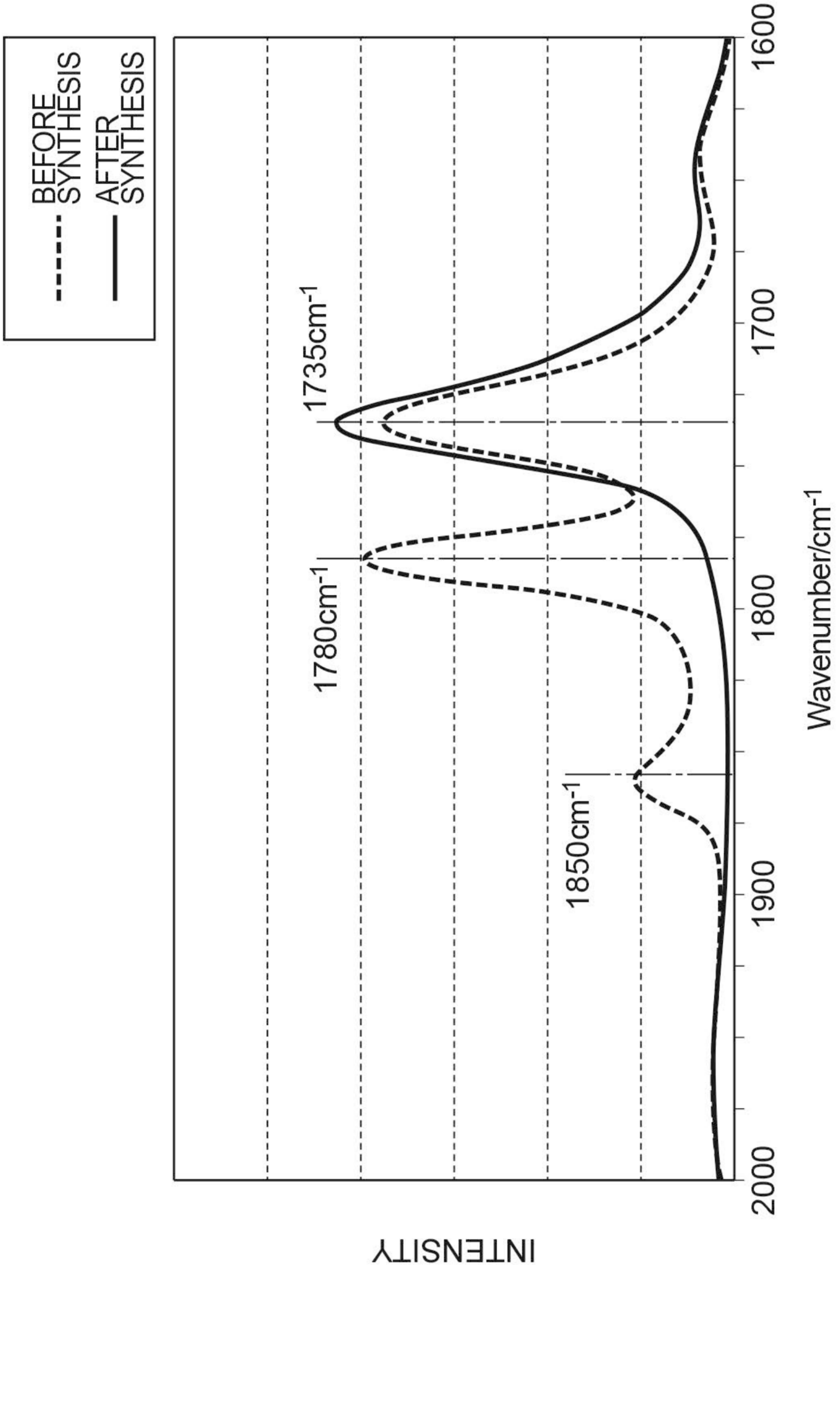
BEFORE SYNTHESIS
AFTER SYNTHESIS
1735cm-1
1780cm-1
1850cm-1
INTENSITY
Wavenumber/cm-1
2000
1900
1800
1700
1600

Fig.4

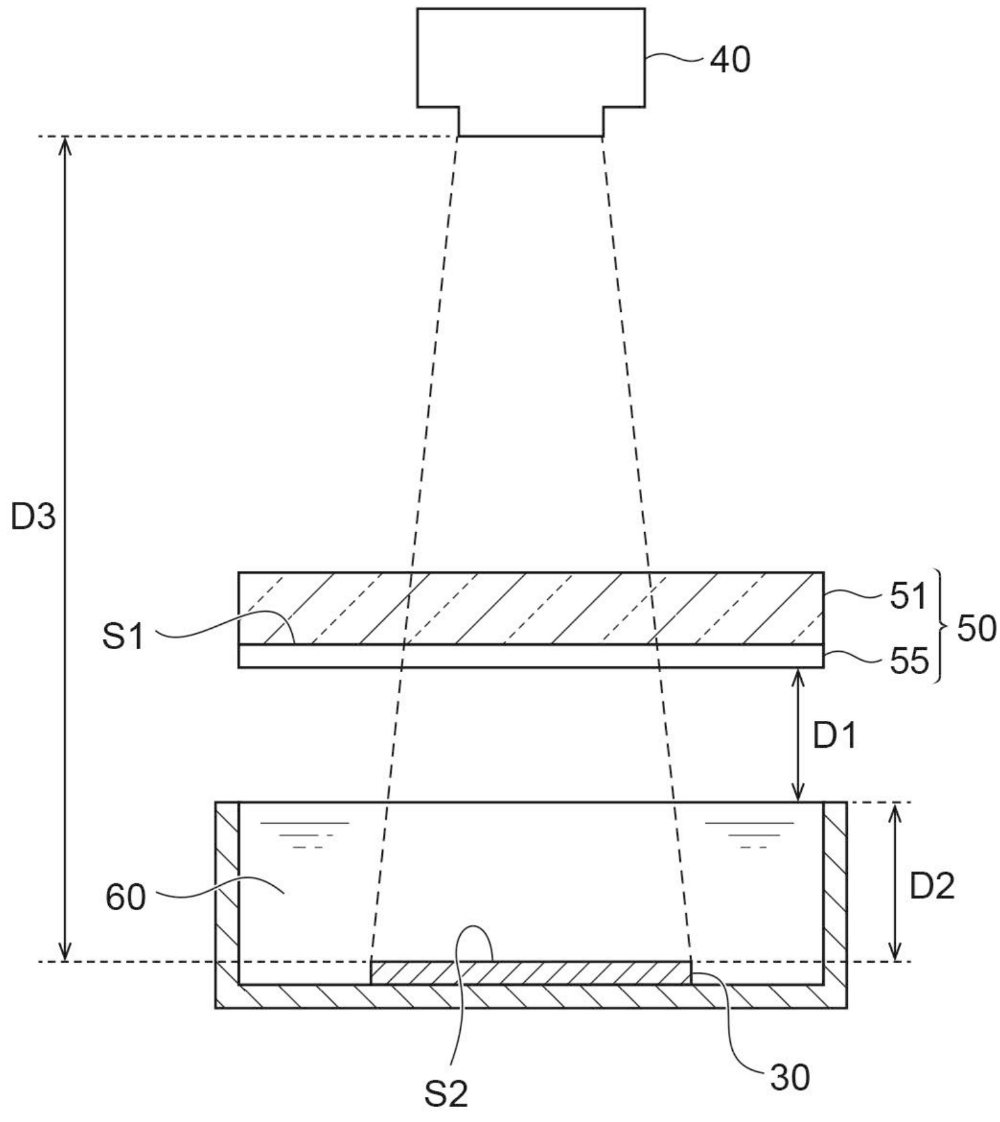

## INTERNATIONAL SEARCH REPORT

International application No.
**PCT/JP2024/022621**

**A. CLASSIFICATION OF SUBJECT MATTER**

***C09K 3/00***(2006.01)i; ***C09D 7/61***(2018.01)i; ***C09D 7/63***(2018.01)i; ***C09D 201/00***(2006.01)i
FI: C09K3/00 R; C09D201/00; C09D7/61; C09D7/63

According to International Patent Classification (IPC) or to both national classification and IPC

**B. FIELDS SEARCHED**

Minimum documentation searched (classification system followed by classification symbols)

C09K3/00; C09D7/61; C09D7/63; C09D201/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2013/089165 A1 (ASAHI GLASS COMPANY, LIMITED) 20 June 2013 (2013-06-20) claims, paragraphs [0079]-[0084], examples, etc., in particular, tables 2-3 | 1-3 |
| Y | | 4-8 |
| X | WO 2022/107879 A1 (SHOWA DENKO MATERIALS CO., LTD.) 27 May 2022 (2022-05-27) claims, paragraphs [0067], [0076]-[0078], examples, etc., in particular, tables 1-2 | 1-2, 5, 7-8 |
| Y | | 4-8 |
| A | | 3 |
| Y | JP 58-101164 A (NIPPON SHEET GLASS COMPANY, LIMITED) 16 June 1983 (1983-06-16) claims, p. 2, upper right column, examples, etc. | 4, 6 |
| A | JP 8-176466 A (NIPPON ARC CO., LTD.) 09 July 1996 (1996-07-09) claims, paragraph [0034], examples, etc. | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/022621**

| Patent document cited in search report | Publication date (day/month/year) | Patent family member(s) | Publication date (day/month/year) |
|---|---|---|---|
| WO 2013/089165 A1 | 20 June 2013 | US 2014/0295175 A1<br>claims, paragraphs [0082]-[0086], examples, etc., in particular, tables 2-3<br>EP 2792486 A1 | |
| WO 2022/107879 A1 | 27 May 2022 | US 2023/0407134 A1<br>claims, paragraphs [0073], [0082]-[0084], examples, etc., in particular, tables 1-2<br>EP 4245818 A1<br>CN 116724093 A<br>KR 10-2023-0107832 A | |
| JP 58-101164 A | 16 June 1983 | (Family: none) | |
| JP 8-176466 A | 09 July 1996 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016027134 A